# EUROPEAN PATENT SPECIFICATION

(11) **EP 2 523 523 B1**
(45) Date of publication and mention of the grant of the patent: **08.07.2015**
(21) Application number: 12003708.0
(22) Date of filing: 09.05.2012
(51) Int. Cl.: H04W 76/00

(54) **Methods for requesting emergency bearer services for low priority devices, and apparatuses using the same**
Verfahren zur Anfrage von Notrufträgerdiensten für Vorrichtungen mit geringer Priorität, und Vorrichtungen damit
Procédés permettant de demander des services de support d'urgence pour des dispositifs de faible priorité et appareil les utilisant

(30) Priority: 13.05.2011 US 201161485645 P; 03.05.2012 US 201213463551
(43) Date of publication of application: 14.11.2012
(73) Proprietor: HTC Corporation, Taoyuan City 330 (TW)
(72) Inventor: Tiwari, Kundan, Taoyuan City Taoyuan County 330 (TW)
(74) Representative: Wimmer, Hubert

(56) References cited:
- US-A1- 2010 297 979
- "3GPP TS 24.301 V10.2.0 (2011-03); 3rd Generation Partnership Project; Technical Specification Group Core Network and Terminals; Non-Access-Stratum (NAS) protocol for Evolved Packet System (EPS); Stage 3 (Release 10)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 1 April 2011 (2011-04-01), pages 1-315, XP050476784, [retrieved on 2011-04-01]
- HTC ET AL: "3GPP TSG-CT WG1 Meeting #73, C1-113281, Defining new service type to handle PS emergency call", 3GPP DRAFT; C1-113281, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Malta; 20110822, 29 August 2011 (2011-08-29), pages 1-6, XP050533801,

## Description

### BACKGROUND OF THE INVENTION

### Field of the Invention

The invention generally relates to the handling of requests for emergency bearer services, and more particularly, to a method for requesting emergency bearer services by a mobile communication device configured for NAS signaling low priority , and mobile communication device using the same.

### Description of the Related Art

For a long time, various machines have been provided to make our lives more convenient in every way. Generally, machines, nowadays, are equipped with computing processors and software to accommodate us with more intelligence-based services. With the advancement of wireless communications, Machine Type Communication (MTC) has been developed to enable communications between remote machines for exchanging information and operating without human interaction. Especially for critical public infrastructures, such as water treatment facilities or bridges, MTC sensors may be employed to monitor the operation statuses of facilities and report measurement results back to control centers using various wireless access technologies, such as the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced technology, and others.

Take the LTE technology in compliance with the 3GPP TS 24.301 specification, v10.3.0 (referred to herein as the TS 24.301 specification) as an example. A low priority indicator or MTC indicator is defined for indicating that a User Equipment (UE) has low priority for Non Access Stratum (NAS) signaling and is generally tolerant to delays. A UE may be configured for NAS signaling low priority when manufactured, and/or when accessing the service network, by Open Mobile Alliance (OMA) Device Management (DM) and/or Subscriber Identity Module/Universal Subscriber Identity Module (SIM/USIM) Over-The-Air (OTA). For a UE configured for NAS signaling low priority (also referred to as a low priority device), the RRC establishment cause used during originating an EXTENDED SERVICE REQUEST message for requesting packet services is always set to "Delay tolerant", even if the packet services are for emergency bearer services. As a result, the emergency bearer services will not be prioritized as they should be.

The document 3GPP TS 24.301 V10.2.0 (2011-03) "3rd Generation Partnership Project; Technical Specification Group Core Network and Terminals; Non-Access-Stratum (NAS) protocol for Evolved Packet System (EPS); Stage 3 (Release 10)" describes the mapping of NAS procedure to RRC establishment cause for S1 mode only.

The document US 2010/0297979 A1 describes a method and apparatus for processing emergency calls by simplifying call setup procedures and minimizing call setup delay. In one scenario, a system information (SI) broadcast may include emergency services support information that conveys various emergency call network support levels and setup procedures. The SI broadcast is decoded to retrieve system parameters used to process an emergency call. The SI broadcast may include a bitmap or at least one information element (IE), that indicates the various emergency call network support levels.

### BRIEF SUMMARY OF THE INVENTION

In accordance with the present invention, a mobile communication device as set forth in claim 1, and a method as set forth in claim 7 are provided. Further embodiments of the invention are claimed in the dependent claims.

In order to solve the above-mentioned problem, the invention proposes to explicitly indicate the emergency case when transmitting a RRC CONNECTION REQUEST message for requesting emergency bearer services, so that the emergency bearer services may be prioritized.

In a first example of the invention, a mobile communication device configured for NAS signaling low priority is provided. The mobile communication device comprises a wireless module and a controller module. The wireless module performs wireless transmissions and receptions to and from a service network supporting use of EXTENDED SERVICE REQUEST messages for packet services. The controller module originates a SERVICE REQUEST message for requesting emergency bearer services, and transmits an RRC CONNECTION REQUEST message comprising an establishment cause indicating an emergency case to the service network via the wireless module in response to originating the SERVICE REQUEST message.

In a second example of the invention, a method for handling a request for emergency bearer services by a mobile communication device configured for NAS signaling low priority with a service network is provided. Particularly, the service network supports use of EXTENDED SERVICE REQUEST messages for packet services. The method comprises the steps of originating a SERVICE REQUEST message for requesting emergency bearer services, and transmitting an RRC CONNECTION REQUEST message comprising an establishment cause indicating an emergency case to a service network in response to originating the SERVICE REQUEST message.

Other examples and features of the present invention will become apparent to those with ordinarily skill in the art upon review of the following descriptions of specific examples and embodiments of mobile communication devices and methods for handling a request for emergency bearer services in low priority devices.

### BRIEF DESCRIPTION OF DRAWINGS

The invention can be more fully understood by reading the subsequent detailed description and examples with references made to the accompanying drawings, wherein:

Fig. 1 is a block diagram illustrating a mobile communication environment according to an embodiment of the invention;

Figs. 2A and 2B show a message sequence chart illustrating the handling of a request for emergency bearer services according to an example of the invention;

Figs. 3A and 3B show a message sequence chart illustrating the handling of a request for emergency bearer services according to another example of the invention;

Figs. 4A and 4B show a message sequence chart illustrating the handling of a request for emergency bearer services according to an embodiment of the invention;

Fig. 5 is a flow chart illustrating the method for handling a request for emergency bearer services according to an example of the invention;

Fig. 6 is a flow chart illustrating the method for handling a request for emergency bearer services according to another example of the invention; and

Fig. 7 is a flow chart illustrating the method for handling a request for emergency bearer services according to the embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. Note that the 3GPP specification(s) described herein are used to teach the spirit of the invention, and the invention is not limited thereto.

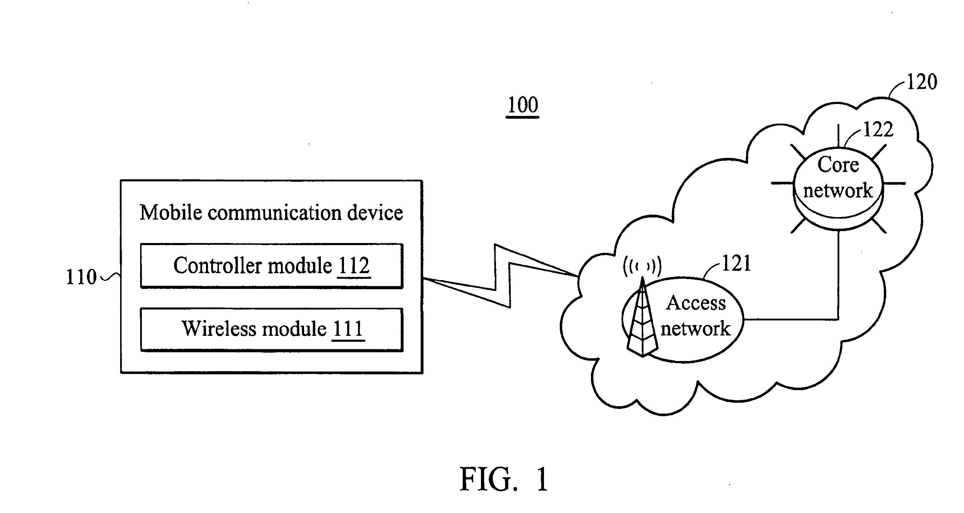

Fig. 1 is a block diagram illustrating a mobile communication environment according to an embodiment of the invention. In the mobile communication environment 100, the mobile communication device 110 is configured for NAS signaling low priority, and is wirelessly connected to the service network 120 for obtaining wireless services. The service network 120 may comprise an access network 121 and a core network 122, wherein the access network 121 may be an Evolved Universal Mobile Telecommunications System (UMTS) Terrestrial Radio Access Network (E-UTRAN) which may comprise at least one eNode-B (eNB), and the core network 122 may be an Evolved Packet Core (EPC) in the LTE/LTE-Advanced technology. The mobile communication device 110 comprises a wireless module 111 for performing the functionality of wireless transmissions and receptions to and from the service network 120, and a controller module 112 for controlling the operation of the wireless module 111 to carry out the communications with the service network 120 in compliance with the communication protocol in use. Taking the LTE technology for example, the communication protocol stack may generally comprise a NAS layer and an AS layer, wherein the NAS layer is a functional layer for providing the signaling and traffic between the mobile communication device 110 and the core network 122, and the AS layer is a functional layer for providing the signaling and traffic between the mobile communication device 110 and the access network 121. Also, the controller module 112 may further control the operation of other functional components, such as a display unit and/or keypad serving as the Man-Machine Interface (MMI), a storage unit storing the program codes of applications, or others. To further clarify, the wireless module 111 may be a Radio Frequency (RF) unit, and the controller module 112 may be a general-purpose processor or a Micro-Control Unit (MCU) of a baseband unit. The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 900MHz, 2100MHz, or 2.6GHz utilized in LTE/LTE-Advanced systems, or others depending on the Radio Access Technology (RAT) in use.

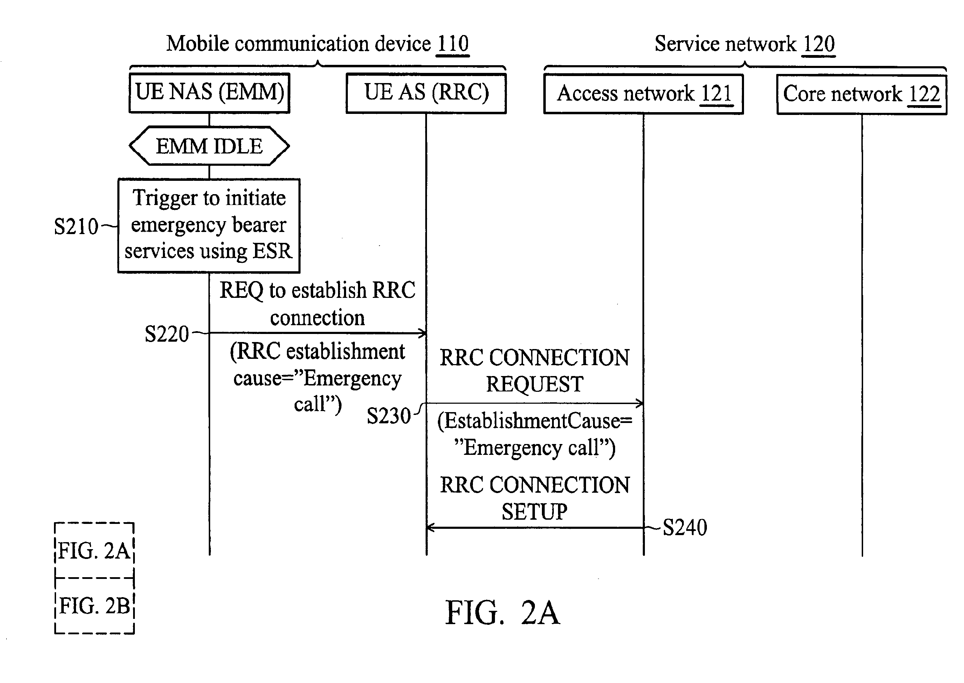

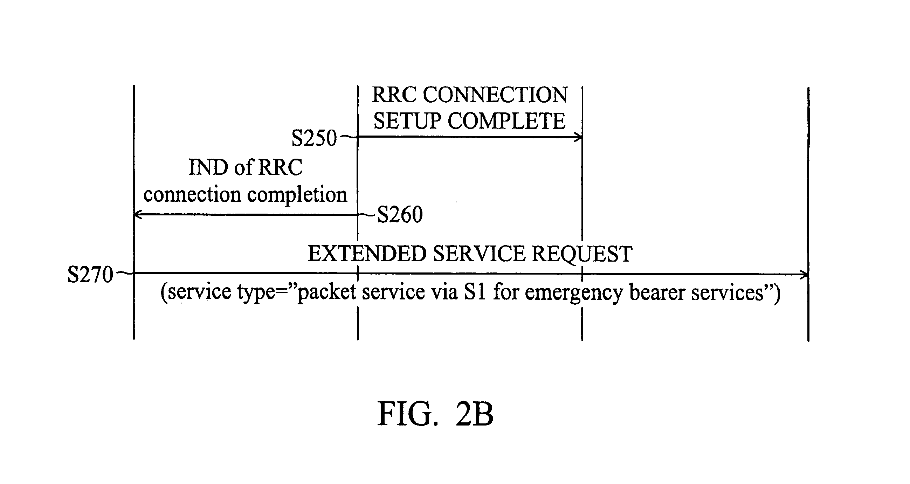

To be more specific, the controller module 112 controls the wireless module 111 for handling a request for emergency bearer services. Figs. 2A and 2B show a message sequence chart illustrating the handling of a request for emergency bearer services according to an example of the invention. In this example, the handling of the request for emergency bearer services takes place in the mobile communication device 110. For brevity, the NAS layer and AS layer of the communication protocol at the side of the mobile communication device 110 are referred to herein as the UE NAS layer and the UE AS layer, respectively. As shown in Fig. 2A, the UE NAS layer is initially in the EMM IDLE mode, and then triggers to initiate emergency bearer services using an EXTENDED SERVICE REQUEST (ESR) message (step S210). In other words, the UE NAS layer originates the EXTENDED SERVICE REQUEST message for requesting emergency bearer services. In one example, the UE NAS layer may perform an attach procedure before initiating the emergency bearer services, and during the attach procedure, an "EPS network feature support" IE received in an ATTACH ACCEPT message indicates that the service network 120 supports use of EXTENDED SERVICE REQUEST messages for packet services. In another example, the UE NAS layer may perform a tracking area update procedure before initiating the emergency bearer services, and during the tracking area update procedure, an "EPS network feature support" IE received in a TRACKING AREA UPDATE ACCEPT message indicates that the service network 120 supports use of EXTENDED SERVICE REQUEST messages for packet services. Specifically, the "EPS network feature support" IE includes an ESR PS indicator bit for indicating whether the use of EXTENDED SERVICE REQUEST messages is supported by the service network 120. It is determined that the service network 120 supports use of EXTENDED SERVICE REQUEST messages for packet services, if the ESR PS indicator bit is set to 1; and that the service network 120 does not support use of EXTENDED SERVICE REQUEST messages for packet services, if the ESR PS indicator bit is set to 0.

Next, the UE NAS layer requests the UE AS layer to establish a Radio Resource Control (RRC) connection for the emergency bearer services (step S220). Specifically, the request comprises an RRC establishment cause which is set to "Emergency call". In response to the request, the UE AS layer transmits to the access network 121 an RRC CONNECTION REQUEST message comprising an establishment cause which is set to "Emergency call" to indicate an emergency case according to the RRC establishment cause (step S230).

When receiving the RRC CONNECTION REQUEST message, the access network 121 recognizes that the request is for an emergency case according to the received establishment cause, so it replies to the UE AS layer with an RRC CONNECTION SETUP message (step S240). The RRC CONNECTION SETUP message may comprise the parameters and configurations for establishing the RRC connection. When receiving the RRC CONNECTION SETUP message, the UE AS layer establishes an RRC connection according to the received parameters and configurations, and then transmits an RRC CONNECTION SETUP COMPLETE message to the access network 121 (step S250), to complete the RRC connection establishment.

Subsequently, the UE AS layer further indicates the completion of the RRC connection establishment to the UE NAS layer (step S260). After that, the UE NAS layer include a service type Information Element (IE) which is set to "packet service via S1 for emergency bearer services" in the EXTENDED SERVICE REQUEST message, and then transmits the EXTENDED SERVICE REQUEST message to the core network 122 (step S270). Thus, with the setting of the establishment cause to "Emergency call", both of the UE AS layer and the access network 121 (i.e., the AS layer of the communication protocol at the network side) prioritize the connection establishment and so will further prioritize the requested emergency bearer services. In addition, with the setting of the service type to "packet service via S1 for emergency bearer services", both of the UE NAS layer and the core network 122 (i.e., the NAS layer of the communication protocol at the network side) will prioritize the requested emergency bearer services.

In another example, the service type IE in the EXTENDED SERVICE REQUEST message may be set to "packet service via S1" instead, and the prioritization of the emergency bearer services may be achieved only by the setting of the establishment cause to "Emergency call" in the UE AS layer.

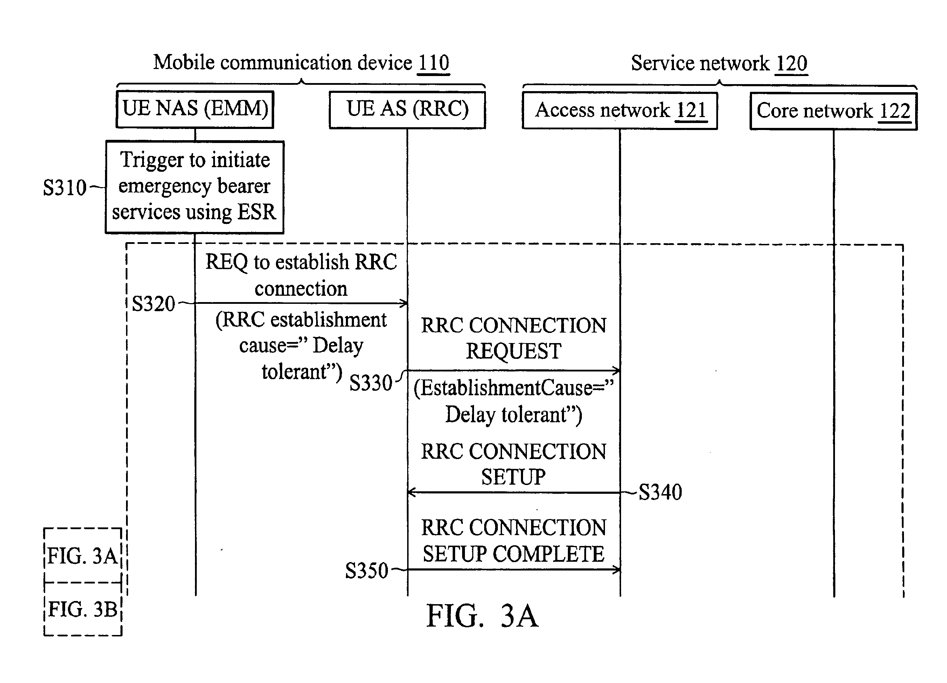

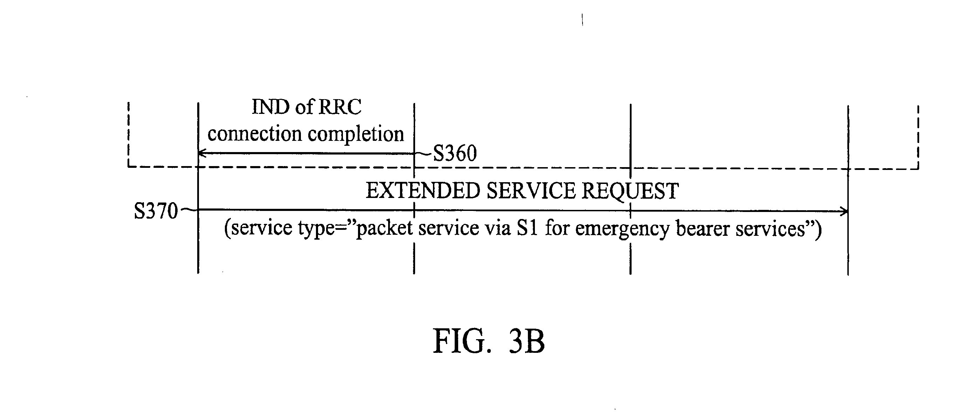

Figs. 3A and 3B show a message sequence chart illustrating the handling of a request for emergency bearer services according to another example of the invention. Similar to Figs. 2A and 2B, the handling of the request for emergency bearer services takes place in the mobile communication device 110. In this example, the UE NAS layer may be initially in the EMM IDLE mode or the EMM CONNECTED mode, and then be triggered to initiate emergency bearer services using an EXTENDED SERVICE REQUEST message (step S310). Note that, before initiating the emergency bearer services, the UE NAS layer may determine that the service network 120 supports use of EXTENDED SERVICE REQUEST messages for packet services, as described above during a previous attach procedure or tracking area update procedure.

For the case of the UE NAS layer being in the EMM IDLE mode, the UE NAS layer may request the UE AS layer to establish an RRC connection for the emergency bearer services, with an RRC establishment cause set to "Delay tolerant" (step S320), and then the UE AS layer may perform a connection establishment procedure according to the RRC establishment cause (steps S330∼S350) and indicate the completion of the connection establishment procedure to the UE NAS layer (step S360). Note that, the steps S320∼S360 are optional and denoted by a dotted block in Figs. 3A and 3B, and the steps S330∼S350 are similar to steps S230∼S250 in Figs. 2A and 2B except with different establishment cause. After that, the UE NAS layer transmits the EXTENDED SERVICE REQUEST message to the core network 122, wherein the EXTENDED SERVICE REQUEST message comprises a service type IE which is set to "packet service via S1 for emergency bearer services" (step S370).

For the case of the UE NAS layer being in the EMM CONNECTED mode, the RRC connection has already been established between the UE AS layer and the access network 121 and the UE NAS layer has already been attached to the core network 122, so the steps S320∼360 may be skipped to proceed to the step S370 directly. Thus, with the setting of the service type to "packet service via S1 for emergency bearer services", both of the UE NAS layer and the core network 122 (i.e., the NAS layer of the communication protocol at the network side) will prioritize the requested emergency bearer services.

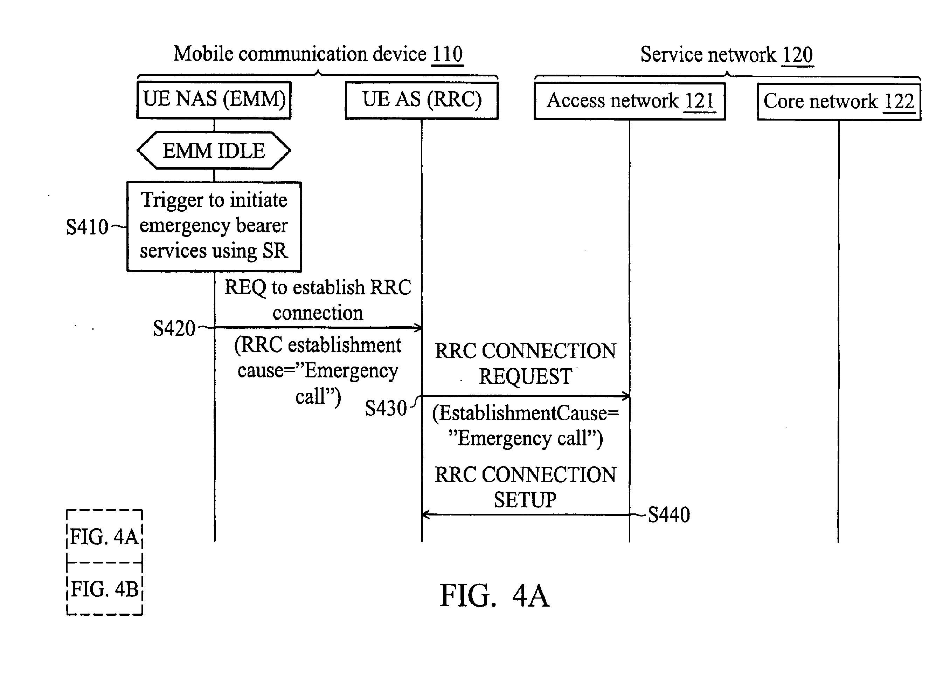

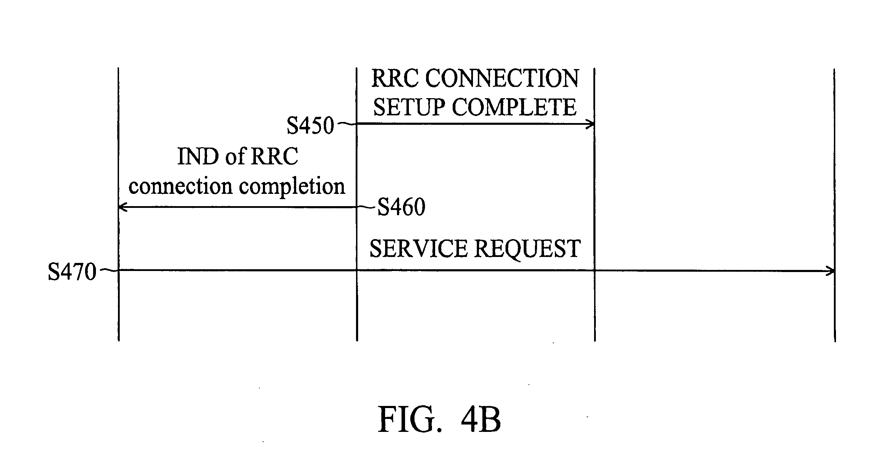

Figs. 4A and 4B show a message sequence chart illustrating the handling of a request for emergency bearer services according to an embodiment of the invention. Similar to Figs. 2A and 2B, the handling of the request for emergency bearer services takes place in the mobile communication device 110. In this embodiment, the UE NAS layer may be initially in the EMM IDLE mode, and then be triggered to initiate emergency bearer services using a SERVICE REQUEST (SR) message instead of an EXTENDED SERVICE REQUEST message (step S410). In other words, the UE NAS layer originates the SERVICE REQUEST message for requesting emergency bearer services. Note that, before initiating the emergency bearer services, the UE NAS layer may determine that the service network 120 supports use of EXTENDED SERVICE REQUEST messages for packet services, as described above during a previous attach procedure or tracking area update procedure.

Next, the UE NAS layer requests the UE AS layer to establish an RRC connection for the emergency bearer services, with an RRC establishment cause set to "Emergency call" (step S420), and then the UE AS layer performs a connection establishment procedure according to the RRC establishment cause (steps S430∼S450) and indicates the completion of the connection establishment procedure to the UE NAS layer (step S460). The steps S420∼S460 are similar to steps S220∼S260 in Figs. 2A and 2B, and the detailed operations are not described again here for brevity. Subsequent to the step S460, the UE NAS layer transmits the SERVICE REQUEST message to the core network 122 (step S470). Thus, with the setting of the establishment cause to "Emergency call", both of the UE AS layer and the access network 121 (i.e., the AS layer of the communication protocol at the network side) prioritize the connection establishment, and thus, the requested emergency bearer services are also prioritized.

Note that, in Figs. 2A, 2B, 3A, 3B, 4A, and 4B, detailed descriptions of other related operations for the service request procedure are omitted herein since they are beyond the scope of the invention, and references may be made to the TS 24.301 specification.

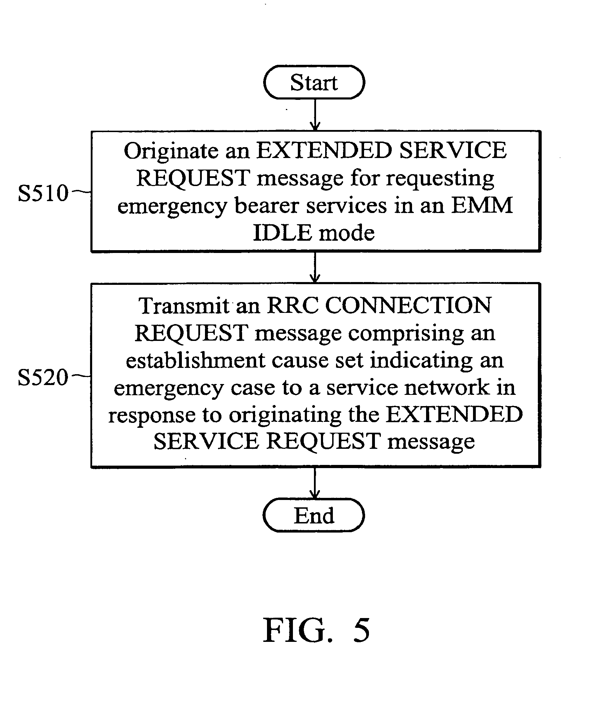

Fig. 5 is a flow chart illustrating the method for handling a request for emergency bearer services according to an example of the invention. In this example, the method may be applied to any mobile communication device which is configured for NAS signaling low priority. To begin the method, the mobile communication device originates an EXTENDED SERVICE REQUEST message for requesting emergency bearer services in an EMM IDLE mode (step S510). Next, the mobile communication device transmits an RRC CONNECTION REQUEST message comprising an establishment cause indicating an emergency case to a service network in response to originating the EXTENDED SERVICE REQUEST message (step S520). To further clarify, the origination of the EXTENDED SERVICE REQUEST message may be triggered by the NAS layer of the communication protocol in the mobile communication device, and the transmission of the RRC CONNECTION REQUEST message may be performed by the AS layer of the communication protocol in the mobile communication device in response to receiving a request from the NAS layer for establishing an RRC connection. Particularly, the request may include an RRC establishment cause to indicate the setting of the establishment cause in the RRC CONNECTION REQUEST message to "Emergency call". Thus, with the establishment cause indicating an emergency case, both of the AS layers at the UE side and the network side will prioritize the RRC connection establishment, so that the requested emergency bearer services may be further prioritized.

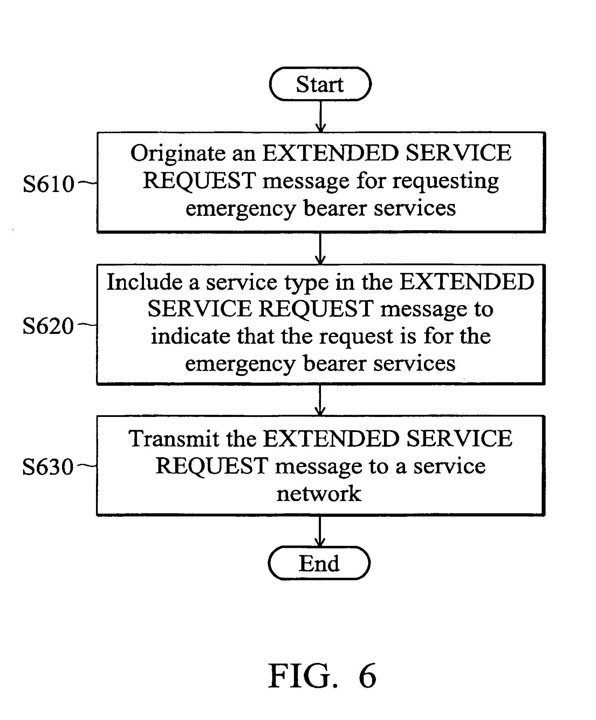

Fig. 6 is a flow chart illustrating the method for handling a request for emergency bearer services according to another example of the invention. Similar to Fig. 5, the method may be applied to any mobile communication device which is configured for NAS signaling low priority. To begin the method, the mobile communication device originates an EXTENDED SERVICE REQUEST message for requesting emergency bearer services (step S610). Also, the mobile communication device includes a service type in the EXTENDED SERVICE REQUEST message to indicate that the request is for the emergency bearer services (step S620), and then transmits the EXTENDED SERVICE REQUEST message to a service network (step S630). In another embodiment, if the mobile communication device is in the EMM IDLE mode when originating the EXTENDED SERVICE REQUEST message, it may perform establishment of an RRC connection before the step S630. To further clarify, the origination of the EXTENDED SERVICE REQUEST message may be triggered by the NAS layer of the communication protocol in the mobile communication device, and the service type may be set to "packet service via S1 for emergency bearer services" to indicate the emergency case. Thus, with the setting of the service type, both of the NAS layers at the UE side and the network side will prioritize the requested emergency bearer services.

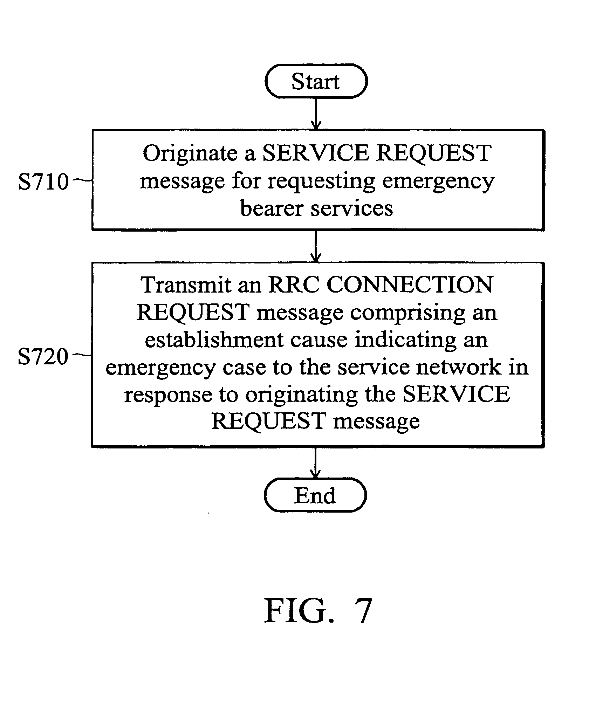

Fig. 7 is a flow chart illustrating the method for handling a request for emergency bearer services according to the embodiment of the invention. Similar to Fig. 5, the method may be applied to any mobile communication device which is configured for NAS signaling low priority. To begin the method, the mobile communication device originates a SERVICE REQUEST message for requesting emergency bearer services (step S710). Note that, in this embodiment, the mobile communication device originates a SERVICE REQUEST message, instead of an EXTENDED SERVICE REQUEST message, for requesting emergency bearer services, even when it knows that the associated service network supports use of EXTENDED SERVICE REQUEST messages for packet services. Specifically, before initiating the emergency bearer services, the mobile communication device may determine that the service network supports use of EXTENDED SERVICE REQUEST messages for packet services, as described above during a previous attach procedure or tracking area update procedure. Next, the mobile communication device transmits an RRC CONNECTION REQUEST message comprising an establishment cause indicating an emergency case to the service network in response to originating the SERVICE REQUEST message (step S720). To further clarify, the origination of the SERVICE REQUEST message may be triggered by the NAS layer of the communication protocol in the mobile communication device, and the transmission of the RRC CONNECTION REQUEST message may be performed by the AS layer of the communication protocol in the mobile communication device in response to receiving a request from the NAS layer for establishing an RRC connection. Particularly, the request may include an RRC establishment cause to indicate the setting of the establishment cause in the RRC CONNECTION REQUEST message to "Emergency call". Thus, with the establishment cause indicating an emergency case, both of the AS layers at the UE side and the network side will prioritize the RRC connection establishment, so that the requested emergency bearer services may be also prioritized.

While the invention has been described by way of example and in terms of preferred embodiment, it is to be understood that the invention is not limited thereto. Those who are skilled in this technology can still make various alterations and modifications without departing from the scope of this invention. For example, the method for handling a request for emergency bearer services may also be applied to any low priority devices in compliance with any evolutionary technology of the LTE/LTE-Advanced technology. Therefore, the scope of the present invention shall be defined and protected by the following claims.

## Claims

1. A mobile communication device (110), configured for Non Access Stratum, NAS, signaling low priority, comprising:
a wireless module (111) adapted to perform wireless transmissions and receptions to and from a service network supporting use of EXTENDED SERVICE REQUEST messages for packet services;
a controller module (112) adapted to receive a message that the service network (120) supports use of EXTENDED SERVICE REQUEST messages for packet services; and wherein the controller module (112) is further adapted to originate (S710) a SERVICE REQUEST message for requesting emergency bearer services in an EMM IDLE mode, and adapted to transmit (S720) an RRC CONNECTION REQUEST message comprising an establishment cause indicating an emergency case to the service network (120) via the wireless module (111) in response to originating the SERVICE REQUEST message, wherein the emergency bearer services are prioritized in an Access Stratum, AS, layer in response to the establishment cause indicating the emergency case, wherein the AS layer relates to the mobile communication device and the service network and wherein the prioritization of the AS layer is performed at both the mobile communication device and the service network.

2. The mobile communication device (110) of claim 1, wherein the establishment cause in the RRC CONNECTION REQUEST message is set to "Emergency call" to indicate the emergency case, according to an RRC establishment cause of a NAS layer.

3. The mobile communication device (110) of claim 1, wherein the controller module (112) is further adapted to receive an RRC CONNECTION SETUP message corresponding to the RRC CONNECTION REQUEST message from the service network (120) via the wireless module (111), and adapted to transmit an RRC CONNECTION SETUP COMPLETE message to the service network (120) via the wireless module (111) in response to receiving the RRC CONNECTION SETUP message.

4. The mobile communication device (110) of claim 3, wherein the controller module (112) is further adapted to transmit the SERVICE REQUEST message to the service network (120) via the wireless module (111) in response to the transmission of the RRC CONNECTION SETUP COMPLETE message.

5. The mobile communication device (110) of claim 1, wherein, prior to originating (S710 the SERVICE REQUEST message for requesting emergency bearer services, the controller module (112) is further adapted to transmit an ATTACH REQUEST message to the service network (120) via the wireless module (111), and adapted to receive an ATTACH ACCEPT message comprising an "EPS network feature support" Information Element (IE) from the service network (120) via the wireless module (111), wherein the "EPS network feature support" IE indicates that the service network (120) supports use of EXTENDED SERVICE REQUEST messages for packet services.

6. The mobile communication device (110) of claim 1, wherein, prior to originating (S710 the SERVICE REQUEST message for requesting emergency bearer services, the controller module (112) is further adapted to transmit a TRACKING AREA UPDATE REQUEST message to the service network (120) via the wireless module (111), and adapted to receive a TRACKING AREA UPDATE ACCEPT message comprising an "EPS network feature support" IE from the service network (120) via the wireless module (111), wherein the "EPS network feature support" IE indicates that the service network (120) supports use of EXTENDED SERVICE REQUEST messages for packet services.

7. A method for handling a request for emergency bearer services by a mobile communication device (110) configured for NAS signaling low priority with a service network (120), wherein the service network (120) supports use of EXTENDED SERVICE REQUEST messages for packet services, the method comprising:
receiving a message that the service network (120) supports use of EXTENDED SERVICE REQUEST messages for packet services;
originating (S710 a SERVICE REQUEST message for requesting emergency bearer services in an EMM IDLE mode; and
transmitting (S720) an RRC CONNECTION REQUEST message comprising an establishment cause indicating an emergency case to the service network (120) in response to originating the SERVICE REQUEST message, wherein the emergency bearer services are prioritized in an AS layer in response to the establishment cause indicating the emergency case, wherein the AS layer relates to the mobile communication device and the service network and wherein the prioritization of the AS layer is performed at both the mobile communication device and the service network.

8. The method of claim 7, wherein the establishment cause in the RRC CONNECTION REQUEST message is set to "Emergency call" to indicate the emergency case, according to an RRC establishment cause of a NAS layer.

9. The method of claim 7, further comprising receiving an RRC CONNECTION SETUP message corresponding to the RRC CONNECTION REQUEST message from the service network (120), and transmitting an RRC CONNECTION SETUP COMPLETE message to the service network (120) in response to receiving the RRC CONNECTION SETUP message.

10. The method of claim 10, further comprising transmitting the SERVICE REQUEST message to the service network in response to the transmission of the RRC CONNECTION SETUP COMPLETE message.

11. The method of claim 7, further comprising, prior to originating (S710 the SERVICE REQUEST message for requesting the emergency bearer services, transmitting an ATTACH REQUEST message to the service network, and receiving an ATTACH ACCEPT message comprising an "EPS network feature support" IE from the service network (120), wherein the "EPS network feature support" IE indicates to the mobile communication device (110) that the service network (120) supports use of EXTENDED SERVICE REQUEST messages for packet services.

12. The method of claim 7, further comprising, prior to originating (S710 the SERVICE REQUEST message for requesting the emergency bearer services, transmitting a TRACKING AREA UPDATE REQUEST message to the service network (120), and receiving a TRACKING AREA UPDATE ACCEPT message comprising an "EPS network feature support" IE from the service network (120), wherein the "EPS network feature support" IE indicates to the mobile communication device (110) that the service network (120) supports use of EXTENDED SERVICE REQUEST messages for packet services.

## Patentansprüche

1. Eine mobile Kommunikationsvorrichtung (110), wobei die Kommunikationsvorrichtung für Non Access Stratum, NAS; Niedrigprioritätssignalisierung konfiguriert ist, wobei die Vorrichtung Folgendes aufweist:
ein drahtloses Modul (111), das adaptiert ist zum Ausführen von drahtlosem Senden und Empfangen zu und von einem Service Netzwerk, das die Verwendung von Extended Service Request- bzw. erweiterte Dienstanfragenachrichten für Paket Dienste unterstützt;
ein Steuermodul (112), das adaptiert ist zum Empfangen einer Nachricht, dass das Service Netzwerk (120) die Verwendung von Extended Service Request Nachrichten für Paket Dienste unterstützt; und wobei das Steuermodul (112) ferner adaptiert ist eine Service Request bzw. Dienstanfragenachricht zum Anfragen von Notfallträgerdiensten in einem EMM Idle Modus zu veranlassen (S710), und adaptiert ist eine RRC Connection Request- bzw. eine RRC Verbindungsanfragenachricht über das drahtlose Modul (112) an das Service Netzwerk (120) zu Senden (S720), die einen Einrichtungsgrund aufweist, der einen Notfall anzeigt, ansprechend auf das Veranlassen der Service Request Nachricht, wobei die Notfallträgerdienste in einem Access Stratum, AS, Layer priorisiert sind, ansprechend auf den Einrichtungsgrund, der den Notfall anzeigt, wobei der AS Layer zu der mobilen Kommunikationsvorrichtung und dem Service Netzwerk gehört, und wobei die Priorisierung des AS Layers sowohl in der mobilen Kommunikationsvorrichtung als auch in dem Service Netzwerk ausgeführt wird.

2. Die mobile Kommunikationsvorrichtung (110) nach Anspruch 1, wobei der Einrichtungsgrund in der RRC Connection Request Nachricht auf "Emergency Call" bzw. Notruf gesetzt ist, um den Notfall anzuzeigen, entsprechend eines RRC Einrichtungsgrundes eines NAS Layers.

3. Die mobile Kommunikationsvorrichtung (110) nach Anspruch 1, wobei das Steuermodul (112) ferner adaptiert ist eine RRC Connection Setup- bzw. RRC Verbindungsaufbaunachricht entsprechend der RRC Connection Request Nachricht von dem Service Netzwerk (120) über das drahtlose Modul (111) zu empfangen, und adaptiert ist eine RRC Connection Setup Complete- bzw. RRC Verbindungsaufbau-abgeschlossen-Nachricht an das Service Netzwerk (120), über das drahtlose Modul (111), ansprechend auf das Empfangen der RRC Connection Setup Nachricht, zu senden.

4. Die mobile Kommunikationsvorrichtung (110) nach Anspruch 3, wobei das Steuermodul (112) ferner adaptiert ist die Service Request Nachricht an das Service Netzwerk (120), über das drahtlose Modul (111), ansprechend auf das Senden der RRC Connection Setup Complete Nachricht, zu senden.

5. Die mobile Kommunikationsvorrichtung (110) nach Anspruch 1, wobei, vor dem Veranlassen (S710) der Service Request Nachricht zum Anfragen eines Notfallträgerdienstes, das Steuermodul (112) ferner adaptiert ist eine Attach Request- bzw. eine Anbindungsanfragenachricht an das Service Netzwerk (120), über das drahtlose Modul (111) zu senden, und ferner adaptiert ist eine Attach Accept- bzw. eine Anbindungsakzeptierungsnachricht von dem Service Netzwerk (120), über das drahtlose Modul (111), zu empfangen, die ein "EPS network feature support"- bzw. ein EPS Netzwerksmerkmalunterstützungs-Informationselement (IE) aufweist, wobei das "EPS network feature support" IE anzeigt, dass das Service Netzwerk (120) die Verwendung von Extended Service Request Nachrichten für Paket Dienste unterstützt.

6. Die mobile Kommunikationsvorrichtung (110) nach Anspruch 1, wobei, vor dem Veranlassen (S710) der Service Request Nachricht zum Anfragen eines Notfallträgerdienstes, das Steuermodul (112) ferner adaptiert ist eine Tracking Area Update Request- bzw. eine Nachverfolgungsgebietsaktualisierungsanfragenachricht an das Service Netzwerk (120), über das drahtlose Modul (111) zu senden, und ferner adaptiert ist eine Tracking Area Update Accept- bzw. eine Nachverfolgungsgebietsaktualisierungsakzeptierungsnachricht von dem Service Netzwerk (120), über das drahtlose Modul (111), zu empfangen, die ein "EPS network feature support"- bzw. ein EPS Netzwerksmerkmalunterstützungs-Informationselement (IE) aufweist, wobei das "EPS network feature support" IE anzeigt, dass das Service Netzwerk (120) die Verwendung von Extended Service Request Nachrichten für Paket Dienste unterstützt.

7. Ein Verfahren zur Handhabung einer Anfrage für Notfallträgerdienste durch eine mobile Kommunikationsvorrichtung (110), die konfiguriert ist für NAS Niedrigprioritätssignalisierung mit einem Service Netzwerk (120), wobei das Service Netzwerk (120) die Verwendung von Extended Service Request- bzw. erweiterte Dienstanfragenachrichten für Paket Dienste unterstützt, wobei das Verfahren die folgenden Schritte aufweist:
Empfangen einer Nachricht, dass das Service Netzwerk (120) die Verwendung von Extended Service Request Nachrichten für Paket Dienste unterstützt; und
Veranlassen (S710) einer Service Request bzw. Dienstanfragenachricht zum Anfragen von Notfallträgerdiensten in einem EMM Idle Modus; und
Senden (S720) einer RRC Connection Request- bzw. eine RRC Verbindungsanfragenachricht über das drahtlose Modul (112) an das Service Netzwerk (120), die einen Einrichtungsgrund aufweist, der einen Notfall anzeigt, ansprechend auf das Veranlassen der Service Request Nachricht, wobei die Notfallträgerdienste in einem Access Stratum, AS, Layer priorisiert sind, ansprechend auf den Einrichtungsgrund, der einen Notfall anzeigt, wobei der AS Layer zu der mobilen Kommunikationsvorrichtung und dem Service Netzwerk gehört, und wobei die Priorisierung des AS Layers sowohl in der mobilen Kommunikationsvorrichtung als auch in dem Service Netzwerk ausgeführt wird.

8. Das Verfahren nach Anspruch 7, wobei der Einrichtungsgrund in der RRC Connection Request Nachricht auf "Emergency Call" bzw. Notruf gesetzt ist, um den Notfall anzuzeigen, entsprechend eines RRC Einrichtungsgrundes eines NAS Layers.

9. Das Verfahren nach Anspruch 7, wobei Empfangen einer RRC Connection Setup- bzw. RRC Verbindungsaufbaunachricht entsprechend der RRC Connection Request Nachricht von dem Service Netzwerk (120), und Senden einer RRC Connection Setup Complete- bzw. RRC Verbindungsaufbau-abgeschlossen-Nachricht an das Service Netzwerk (120), ansprechend auf das Empfangen der RRC Connection Setup Nachricht.

10. Das Verfahren nach Anspruch 10, wobei das Verfahren ferner das Senden der Service Request Nachricht an das Service Netzwerk (120) aufweist, ansprechend auf das Senden der RRC Connection Setup Complete Nachricht.

11. Das Verfahren nach Anspruch 7, wobei das Verfahren ferner aufweist, vor dem Veranlassen (S710) der Service Request Nachricht zum Anfragen eines Notfallträgerdienstes, das Senden einer Attach Request- bzw. einer Anbindungsanfragenachricht an das Service Netzwerk, und das Empfangen einer Attach Accept- bzw. einer Anbindungsakzeptierungsnachricht von dem Service Netzwerk (120), die ein "EPS network feature support"- bzw. ein EPS Netzwerksmerkmalunterstützungs-Informationselement (IE) aufweist, wobei das "EPS network feature support" IE der mobilen Kommunikationsvorrichtung (110) anzeigt, dass das Service Netzwerk (120) die Verwendung von Extended Service Request Nachrichten für Paket Dienste unterstützt.

12. Das Verfahren nach Anspruch 7, wobei das Verfahren ferner aufweist, vor dem Veranlassen (S710) der Service Request Nachricht zum Anfragen eines Notfallträgerdienstes, das Senden einer Tracking Area Update Request- bzw. eine Nachverfolgungsgebietsaktualisierungsanfragenachricht an das Service Netzwerk (120), und das Empfangen einer Tracking Area Update Accept- bzw. einer Nachverfolgungsgebietsaktualisierungsakzeptierungsnachricht von dem Service Netzwerk (120), die ein "EPS network feature support"- bzw. ein EPS Netzwerksmerkmalunterstützungs-Informationselement (IE) aufweist, wobei das "EPS network feature support" IE der mobilen Kommunikationsvorrichtung (110) anzeigt, dass das Service Netzwerk (120) die Verwendung von Extended Service Request Nachrichten für Paket Dienste unterstützt.

## Revendications

1. Dispositif de communication mobile (110), agencé pour une faible priorité de signalisation de Strate de Non Accès, NAS, comprenant :
un module sans fil (111) adapté à réaliser des émissions et des réceptions sans fil à destination ou en provenance d'un réseau de service supportant l'utilisation de messages de REQUÊTE DE SERVICE ÉTENDU pour des services de paquets ;
un module contrôleur (112) adapté à recevoir un message indiquant que le réseau de service (120) supporte l'utilisation de messages de REQUÊTE DE SERVICE ÉTENDU pour des services de paquets ; et dans lequel le module contrôleur (112) est en outre adapté à lancer (S710) un message de REQUÊTE DE SERVICE pour demander des services de support d'urgence dans un mode de REPOS EMM, et adapté à émettre (S720) un message de REQUÊTE DE CONNEXION RRC comprenant une cause d'établissement indiquant un cas d'urgence, vers le réseau de service (120) par l'intermédiaire du module sans fil (111) en réponse au lancement du message de REQUÊTE DE SERVICE, les services de support d'urgence étant hiérarchisés par priorité dans une couche de Strate d'Accès, AS, en réponse au fait que la cause d'établissement indique le cas d'urgence, la couche AS concernant le dispositif de communication mobile et le réseau de service, et la hiérarchisation par priorité de la couche AS étant réalisée à la fois au niveau du dispositif de communication mobile et au niveau du réseau de service.

2. Dispositif de communication mobile (110) selon la revendication 1, dans lequel la cause d'établissement se trouvant dans le message de REQUÊTE DE CONNEXION RRC est mise à "Appel d'urgence" pour indiquer le cas d'urgence, conformément à une cause d'établissement RRC d'une couche NAS.

3. Dispositif de communication mobile (110) selon la revendication 1, dans lequel le module contrôleur (112) est en outre adapté à recevoir un message d'ÉTABLISSEMENT DE CONNEXION RRC correspondant au message de REQUÊTE DE CONNEXION RRC, à partir du réseau de service (120) par l'intermédiaire du module sans fil (111), et adapté à émettre un message d'ACHÈVEMENT d'ÉTABLISSEMENT DE CONNEXION RRC vers le réseau de service (120) par l'intermédiaire du module sans fil (111) en réponse à la réception du message d'ÉTABLISSEMENT DE CONNEXION RRC.

4. Dispositif de communication mobile (110) selon la revendication 3, dans lequel le module contrôleur (112) est en outre adapté à émettre le message de REQUÊTE DE SERVICE vers le réseau de service (120) par l'intérieur du module sans fil (111) en réponse à l'émission du message d'ACHÈVEMENT D'ÉTABLISSEMENT DE CONNEXION RRC.

5. Dispositif de communication mobile (110) selon la revendication 1, dans lequel, avant de lancer (S710) le message de REQUÊTE DE SERVICE pour demander des services de support d'urgence, le module contrôleur (112) est en outre adapté à émettre un message de REQUÊTE D'ATTACHEMENT vers le réseau de service (120) par l'intermédiaire du module sans fil (111), et adapté à recevoir un message d'ACCEPTATION D'ATTACHEMENT comprenant un élément d'information (IE) de "support de fonctionnalités réseau EPS" à partir du réseau de service (120) par l'intermédiaire du module sans fil (111), l'IE de "support de fonctionnalités réseau EPS" indiquant que le réseau de service (120) supporte l'utilisation de messages de REQUÊTE DE SERVICE ÉTENDU pour des services de paquets.

6. Dispositif de communication mobile (110) selon la revendication 1, dans lequel, avant de lancer (S710) le message de REQUÊTE DE SERVICE pour demander des services de support d'urgence, le module contrôleur (112) est en outre adapté à émettre un message de REQUÊTE DE MISE À JOUR DE ZONE DE SUIVI vers le réseau de service (120) par l'intermédiaire du module sans fil (111), et adapté à recevoir un message d'ACCEPTATION DE MISE À JOUR DE ZONE DE SUIVI comprenant un IE de "support de fonctionnalités réseau EPS" à partir du réseau de service (120) par l'intermédiaire du module sans fil (111), l'IE de "support de fonctionnalités réseau EPS" indiquant que le réseau de service (120) supporte l'utilisation de messages de REQUÊTE DE SERVICE ÉTENDU pour des services de paquets.

7. Procédé pour gérer une requête de services de support d'urgence par un dispositif de communication mobile (110) agencé pour une faible priorité de signalisation NAS avec un réseau de service (120), dans lequel le réseau de service (120) supporte l'utilisation de messages de REQUÊTE DE SERVICE ÉTENDU pour des services de paquets, le procédé comprenant :
recevoir un message indiquant que le réseau de service (120) supporte l'utilisation de messages de REQUÊTE DE SERVICE ÉTENDU pour des services de paquets ;
lancer (S710) un message de REQUÊTE DE SERVICE pour demander des services de support d'urgence dans un mode de REPOS EMM ; et
émettre (S720) un message de REQUÊTE DE CONNEXION RRC comprenant une cause d'établissement indiquant un cas d'urgence, vers le réseau de service (120) en réponse au lancement du message de REQUÊTE DE SERVICE, les services de support d'urgence étant hiérarchisés par priorité dans une couche de Strate d'Accès, AS, en réponse au fait que la cause d'établissement indique le cas d'urgence, la couche AS concernant le dispositif de communication mobile et le réseau de service, et la hiérarchisation par priorité de la couche AS étant réalisée à la fois au niveau du dispositif de communication mobile et au niveau du réseau de service.

8. Procédé selon la revendication 7, dans lequel la cause d'établissement se trouvant dans le message de REQUÊTE DE CONNEXION RRC est mise à "Appel d'urgence" pour indiquer le cas d'urgence, conformément à une cause d'établissement RRC d'une couche NAS.

9. Procédé selon la revendication 7, comprenant en outre la réception d'un message d'ÉTABLISSEMENT DE CONNEXION RRC correspondant au message de REQUÊTE DE CONNEXION RRC, à partir du réseau de service (120), et l'émission d'un message D'ACHÈVEMENT D'ÉTABLISSEMENT DE CONNEXION RRC vers le réseau de service (120) en réponse à la réception du message d'ÉTABLISSEMENT DE CONNEXION RRC.

10. Procédé selon la revendication 10, comprenant en outre l'émission du message de REQUÊTE DE SERVICE vers le réseau de service en réponse à l'émission du message d'ACHÈVEMENT D'ÉTABLISSEMENT DE CONNEXION RRC.

11. Procédé selon la revendication 7, comprenant en outre, avant de lancer (S710) le message de REQUÊTE DE SERVICE pour demander des services de support d'urgence, l'émission d'un message de REQUÊTE D'ATTACHEMENT vers le réseau de service (120), et la réception d'un message d'ACCEPTATION D'ATTACHEMENT comprenant un élément d'information (IE) de "support de fonctionnalités réseau EPS" à partir du réseau de service (120), l'IE de "support de fonctionnalités réseau EPS" indiquant au dispositif de communication mobile (110) que le réseau de service (120) supporte l'utilisation de messages de REQUÊTE DE SERVICE ÉTENDU pour des services de paquets.

12. Procédé selon la revendication 7, comprenant en outre, avant de lancer (S710) le message de REQUÊTE DE SERVICE pour demander les services de support d'urgence, l'émission d'un message de REQUÊTE DE MISE À JOUR DE ZONE DE SUIVI vers le réseau de service (120), et la réception d'un message d'ACCEPTATION DE MISE À JOUR DE ZONE DE SUIVI comprenant un IE de "support de fonctionnalités réseau EPS" à partir du réseau de service (120), l'IE de "support de fonctionnalités réseau EPS" indiquant au dispositif de communication mobile (110) que le réseau de service (120) supporte l'utilisation de messages de REQUÊTE DE SERVICE ÉTENDU pour des services de paquets.
